# DEMANDE DE BREVET EUROPEEN

(11) **EP 4 454 929 A1**
(43) Date de publication de la demande: **30.10.2024**
(21) Numéro de dépôt: 24170312.3
(22) Date de dépôt: 15.04.2024
(51) Int. Cl.: B60L 50/20, B60L 58/12, B60L 58/21, B62M 6/45, H02J 7/00, H02J 7/14, B62J 43/13, B62M 6/90

(54) **GESTION DE L'ALIMENTATION ELECTRIQUE D'UN VEHICULE A ASSISTANCE ELECTRIQUE DOTE DE PLUSIEURS BATTERIES**

(30) Priorité: 19.04.2023 FR 2303913
(71) Demandeur: ACTIA Group, 31400 Toulouse (FR)
(72) Inventeur: VISIERE, Rémi, 31200 TOULOUSE (FR); JANNOT, Olivier, 31520 RAMONVILLE-SAINT-AGNE (FR)
(74) Mandataire: Santarelli

(57) **Abrégé**

Dans le domaine des véhicules à assistance électrique, VAE, un procédé de gestion de l'alimentation électrique d'un VAE (10) doté d'au moins deux batteries (40, 41, 42), comprend de multiples bascules (600, 615) entre un premier mode de charge d'une première batterie (41) et d'alimentation d'un ou plusieurs moteurs électriques d'entrainement (32) par au moins une deuxième batterie (42) et un deuxième mode de charge de la deuxième batterie (42) et d'alimentation du ou des moteurs électriques (32) par au moins la première batterie (41). Les bascules sont fonction des états de charge respectifs des deux ou plus batteries (SoC1, SoC2). Un seuil de bascule vers le mode de charge d'une dite batterie est défini par un état de charge (SoC1, SoC2) de ladite batterie correspondant à une portion prédéfinie (N) de l'état de charge courant (SoC2, SoC1) de l'autre batterie en charge.

## Description

### DOMAINE DE L'INVENTION

La présente invention concerne les véhicules ou cycles ou vélos à assistance électrique (VAE ou CAE) dotés de plusieurs batteries pour alimenter un ou plusieurs moteurs électriques d'entrainement, et concerne plus particulièrement la gestion de l'alimentation électrique de ceux-ci.

### TECHNIQUES ANTERIEURES

Si la bicyclette traditionnelle est mue par un système de pédalier qui entraîne la roue arrière via une transmission mécanique à chaine ou à courroie, le vélo à assistance électrique peut également entraîner les roues en utilisant la puissance d'un moteur électrique, en assistance au pédalage de l'utilisateur.

Le vélo à assistance électrique s'avère être un moyen de transport peu coûteux et simple, faisant progresser l'usage du vélo comme un moyen de transport quotidien. L'apport des VAE réside en effet dans leur capacité à transporter des charges plus élevées tout en arpentant des terrains plus rudes et en limitant l'effort généré par l'utilisateur cycliste.

L'autonomie et la puissance représentent des enjeux majeurs pour les VAE. Aussi, il est désormais proposé des VAE dotés de plusieurs batteries, généralement deux. Toutes ou partie de ces batteries peuvent en outre être amovibles afin de permettre leur remplacement aisé pour prolonger rapidement l'autonomie.

Néanmoins, la décharge (SoC - « State of Charge » ou niveau de charge) voire la dégradation (SoH - « State of Health » ou état de santé) des batteries dans le temps sont susceptibles d'affecter les performances des VAE. Or, ces batteries représentent un coût important dans l'acquisition d'un VAE et il est donc préférable d'optimiser l'utilisation des batteries et la consommation d'énergie dans ces VAE.

Dans ce dessein, la publication FR2941406 propose d'analyser le niveau de charge de chacune desdites batteries pour identifier laquelle des batteries est la plus chargée, et d'utiliser uniquement la batterie la plus chargée pour entrainer le VAE exclusivement avec le/les moteur(s) électrique(s). Par ailleurs, uniquement la batterie identifiée comme la moins chargée est mise en charge, en utilisant pour cela un moyen annexe générateur d'électricité.

Les inventeurs ont constaté que cette approche n'est pas satisfaisante. En effet, elle est susceptible de réduire la durée de vie des batteries et d'affecter l'autonomie du VAE, de par le mécanisme de bascule entre les batteries.

### EXPOSE DE L'INVENTION

La présente invention vise donc à pallier tout ou partie des inconvénients de l'art antérieur. Dans ce dessein, l'invention concerne tout d'abord un procédé de gestion de l'alimentation électrique d'un véhicule à assistance électrique doté d'au moins deux batteries, comprenant l'étape suivante :
basculer entre un premier mode de charge d'une première batterie par au moins une source électrique et d'alimentation d'un ou plusieurs moteurs électriques d'entrainement par au moins une deuxième batterie et un deuxième mode de charge de la deuxième batterie par l'au moins une source électrique et d'alimentation du ou des moteurs électriques par au moins la première batterie, la bascule étant fonction des états de charge respectifs des deux ou plus batteries,
caractérisé en ce qu'un seuil de bascule vers le mode de charge d'une dite batterie (première ou deuxième) est défini par un état de charge de ladite batterie correspondant à une portion prédéfinie de l'état de charge courant de l'autre batterie en charge (deuxième ou première).

On comprend ici que l'état de charge de la batterie en cours d'utilisation (alimentation des moteurs pour entrainement des roues) est analysé en fonction de celui de la batterie en charge, avec une bascule opérée lorsque ce premier état de charge atteint par exemple un pourcentage prédéfini, strictement inférieur à 1 (« portion » ou sous-partie), de l'état de charge courant de la batterie en charge. A titre d'exemple, le seuil de bascule peut être défini par un niveau correspondant à 50% (la moitié) de l'état de charge de la batterie en cours de charge. D'autres niveaux peuvent bien entendu être envisagés incluant de façon non limitative 30%, 1/3, 40%, 60%, 2/3, 70%, 75%, 80%.

Grâce à cette approche, de multiples bascules, répétées, entre des modes de charge de différentes batteries sont mieux contrôlées, évitant des bascules trop fréquentes et tenant compte de la dynamique de charge de la batterie en charge. Un meilleur équilibre entre les phases de charge et de décharge (utilisation-alimentation) des batteries est obtenu.

Il en résulte une prolongation de la durée de vie des batteries et de l'autonomie des VAE à capacités énergétiques égales. En outre, un maximum d'énergie électrique est disponible sans mettre les batteries en défaut. De fait, la puissance et l'énergie électrique des VAE sont alors exploitées au mieux pour un meilleur agrément ou confort de pilotage.

L'invention concerne alors également un véhicule à assistance électrique doté d'au moins deux batteries pour l'alimentation d'un ou plusieurs moteurs électriques d'entrainement, comprenant une unité de contrôle configurée pour basculer entre un premier mode de charge d'une première batterie par au moins une source électrique et d'alimentation du ou des moteurs électriques par au moins une deuxième batterie et un deuxième mode de charge de la deuxième batterie par l'au moins une source électrique et d'alimentation du ou des moteurs électriques par au moins la première batterie, la bascule étant fonction des états de charge respectifs des deux ou plus batteries,
caractérisé en ce qu'un seuil de bascule vers le mode de charge d'une dite batterie (première ou deuxième) est défini par un état de charge de ladite batterie correspondant à une portion prédéfinie de l'état de charge courant de l'autre batterie en charge (deuxième ou première).

Le VAE présente les mêmes avantages que le procédé ci-dessus.

Des caractéristiques facultatives des modes de réalisation de l'invention sont définies dans les revendications annexées. Certaines de ces caractéristiques sont expliquées ci-dessous en termes de dispositif ou procédé, tandis qu'elles peuvent être transposées en caractéristiques de procédé ou de dispositif respectivement.

Dans un mode de réalisation, le seuil de bascule est défini par 50% de l'état de charge courant de la batterie en charge.

Dans un mode de réalisation, le ou les moteurs électriques d'entrainement sont alimentés en assistance au pédalage ou maindalage d'un utilisateur.

Dans un mode de réalisation, l'au moins une source électrique est embarquée dans le véhicule à assistance électrique. En particulier, l'au moins une source électrique comprend une ou plusieurs sources parmi : au moins une génératrice actionnée par un pédalier ou maindalier, le ou les moteurs configurés en génératrices, une génératrice couplée à un moyen de freinage régénératif, un panneau solaire.

Dans un mode de réalisation, la bascule vers le mode de charge de ladite batterie en fonction d'une portion de l'état de charge courant de l'autre batterie en charge est désactivée pour ladite batterie lorsque l'état de charge de ladite batterie passe sous un seuil de faible charge prédéfini. A titre illustratif, un tel seuil peut être fixé à 10%, 15% ou 20% de SoC. En particulier, ladite batterie dont l'état de charge passe sous le seuil de faible charge est mise en charge jusqu'à ce que l'état de charge d'une autre batterie passent sous le seuil de faible charge. Le procédé comprend alors l'étape suivante : basculer entre les modes de charge chaque fois qu'un état de charge d'une batterie passe sous le seuil de faible charge, la batterie passant sous le seuil de faible charge étant mise en charge alors que l'autre ou les autres batteries alimentent le ou les moteurs électriques.

Dans un mode de réalisation particulier, lorsque l'état de charge de toutes les batteries passe sous le seuil de faible charge ou qu'une fréquence de bascule entre les modes de charge est supérieure à une fréquence critique, le ou les moteurs électriques sont directement alimentés par les batteries et par l'au moins une source électrique, typiquement au moins une génératrice actionnée par un pédalier ou maindalier du véhicule à assistance électrique. Selon une caractéristique particulière, une batterie est mise en veille (donc éteinte ou désactivée électriquement) lorsque son état de charge passe sous un seuil critique prédéfini, par exemple 5%. Selon une autre caractéristique particulière, lorsqu'une batterie est mise en veille, le ou les moteurs électriques sont uniquement et directement alimentés par l'au moins une source électrique, typiquement au moins la génératrice actionnée par le pédalier ou maindalier.

Selon une caractéristique particulière, la bascule vers le mode de charge de ladite batterie en fonction d'une portion de l'état de charge courant de la batterie en charge est réactivée lorsque l'état de charge d'une batterie précédemment sous le seuil de faible charge repasse au-dessus d'un seuil de restauration.

### BREVE DESCRIPTION DES DESSINS

D'autres particularités et avantages de l'invention apparaîtront encore dans la description ci-après, illustrée par les figures ci-jointes qui en illustrent des exemples de réalisation dépourvus de tout caractère limitatif.
La **Figure 1** illustre schématiquement un vélo à assistance électrique comme exemple de cycle à assistance électrique ou plus généralement de VAE.
La **Figure 2** illustre schématiquement une architecture électronique simplifiée d'un tel vélo à assistance électrique.
La **Figure 3** illustre schématiquement une batterie ou pack batterie rechargeable.
La **Figure 4** illustre schématiquement un exemple d'unité de gestion d'alimentation PMU selon des modes de réalisation de l'invention.
La **Figure 5** illustre trois mode d'alimentation du VAE.
La **Figure 6** illustre, à l'aide d'un ordinogramme, des étapes d'un procédé de gestion d'alimentation d'un VAE selon des modes de réalisation.

### DESCRIPTION DETAILLEE

L'invention propose une nouvelle gestion de l'alimentation d'un véhicule à assistance électrique, VAE, doté de plusieurs batteries.

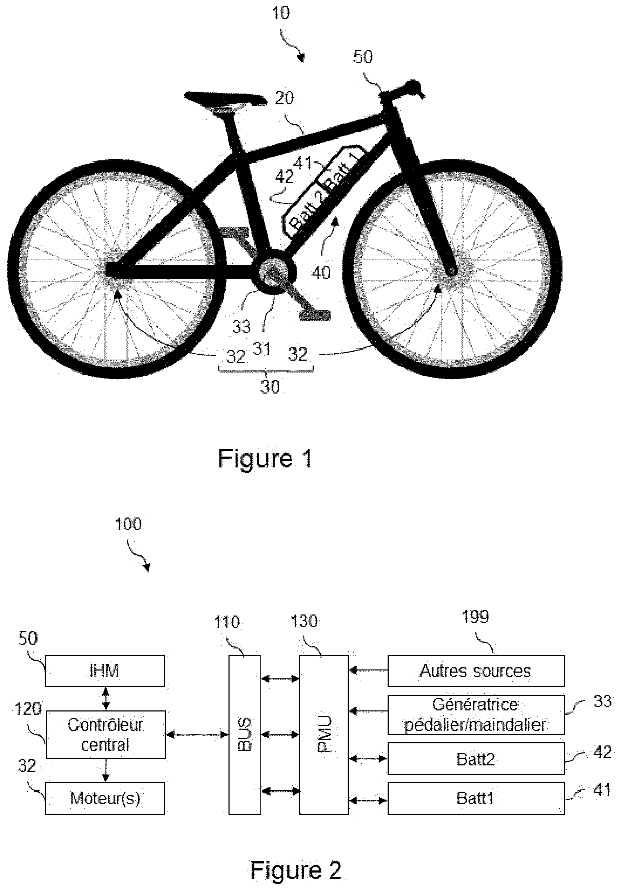

La **Figure 1** illustre schématiquement un vélo à assistance électrique 10 comme exemple de cycle à assistance électrique ou plus généralement de VAE. En effet, un VAE peut également revêtir la forme d'un cycle doté de plus de deux roues, tel un tricycle ou un quadricycle.

Le vélo 10 comporte un cadre de vélo 20, un système de traction 30, un ensemble de deux ou plus batteries rechargeables 40 et une interface homme machine 50 placée de préférence sur le guidon.

Le système de traction 30 illustré est à transmission électrique entre un pédalier 31 et un ou plusieurs moteurs-moyeux 32 logés dans l'axe des roues et entrainant les roues. Le vélo peut comprendre un seul moteur-moyeu sur la roue arrière, ou un moteur-moyeu sur chaque roue. Un tricycle ou quadricycle peut notamment comporter deux moteurs-moyeux sur deux roues.

Les moteurs-moyeux peuvent être des moteurs sur étagère, par exemple opérant sous 48V, avec une puissance de 250W et délivrant un couple maximal de 60 Nm.

Le pédalier 31 est mû par un utilisateur qui appuie sur les pédales. Le pédalier 31 intègre une génératrice 33 qui convertit l'énergie mécanique de pédalage en courant électrique transmis par câble à un contrôleur central pour alimenter les moteurs 32. De façon connue, le courant électrique croit avec l'effort de pédalage. La génératrice pédalier 33 peut adapter la résistance en fonction de l'effort de pédalage, afin d'offrir un retour haptique à l'utilisateur. Ainsi, le contrôleur peut commander de façon correspondante les moteurs-moyeux 32. Typiquement, le ou les moteurs-moyeux sont asservis en vitesse et/ou en couple avec l'assistance électrique. L'énergie excédentaire produite au pédalage est stockée dans les batteries 40 comme exposé par la suite.

Une génératrice pédalier 33 en 48V peut être utilisée.

Sur l'illustration, le vélo comporte deux packs de batterie, typiquement amovibles. Les batteries, ici Batt1 41 et Batt2 42, sont préférablement de même type. Bien entendu un plus grand nombre de batteries peut être envisagé. Les batteries 40 permettent d'alimenter, sous le contrôle du contrôleur central, le ou les moteurs-moyeux 32 lorsque l'assistance électrique est activée, et ainsi entrainer les roues.

Des batteries 48V d'une capacité de 400 à 1400 Wh chacune peuvent être utilisées.

L'interface homme-machine, IHM, 50 permet à l'utilisateur de suivre l'état de charge des batteries, mais également de sélectionner parmi des modes d'assistance électrique ou d'accéder à des informations d'usage (vitesse, distance, heure, etc.).

Le ou les moteurs-moyeux 32 peuvent intégrer un système de récupération d'énergie au freinage comprenant une génératrice de courant électrique, par exemple en 48V.

Une variante à l'utilisation d'un pédalier 31 (et génératrice 33 associée) comprend l'utilisateur d'un maindalier (et génératrice associée) actionné par les mains de l'utilisateur cycliste. Le VAE peut comporter plusieurs pédaliers et/ou plusieurs maindaliers, avec leurs génératrices associées.

Une variante au système de traction 30 à transmission électrique est un système de traction à transmission mécanique, typiquement par chaîne ou courroie. Avec ce type de transmission, un seul moteur d'entraînement est généralement prévu, intégré au pédalier 31 ou maindalier, ou dans le moyeu de la roue arrière 32 pour assister le pédalage/maindalage.

La **Figure 2** illustre schématiquement une architecture électronique simplifiée d'un tel vélo à assistance électrique.

Le système électrique 100 ainsi représenté comporte un bus d'alimentation électrique à tension constante, typiquement 48V, 110 auquel sont reliés le contrôleur central 120 évoqué précédemment ainsi que des sources électriques incluant les batteries 41, 42 comme sources principales, la ou les génératrices pédalier/maindalier 33 comme sources annexes principales et d'autres sources de courant électrique 199 produit, par exemple une génératrice par récupération d'énergie de freinage, un panneau solaire, une éolienne, etc. La figure illustre une unique génératrice pédalier/maindalier 33. Le système électrique peut comporter plusieurs génératrices actionnées chacune par un pédalier 31 ou maindalier.

Les batteries, génératrice 33 et autres sources sont reliées au bus d'alimentation 110 par une unité de gestion d'alimentation PMU 130, permettant de délivrer de l'énergie électrique sur le bus d'alimentation 110.

Le contrôleur central 120 est relié au/aux moteurs 32 qu'il alimente par l'énergie électrique disponible sur le bus d'alimentation 110. Il est également relié à l'IHM 50 pour remonter des informations d'usage ou de batterie, ou récupérer des commandes de l'utilisateur (choix de mode d'assistance).

L'unité PMU 130 met en oeuvre un procédé de gestion de l'alimentation des moteurs, et donc du vélo 10, comme décrit par la suite.

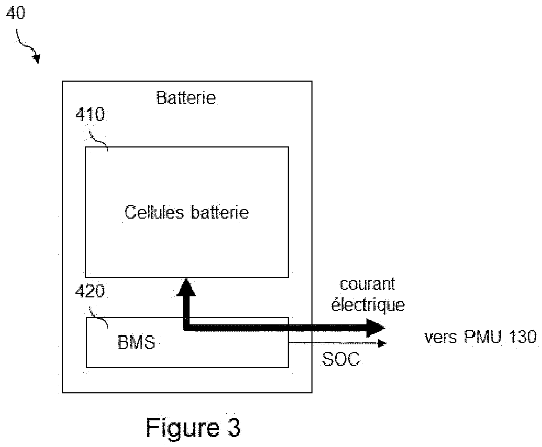

La **Figure 3** illustre schématiquement une batterie ou pack batterie rechargeable 40 utilisé. La batterie 40 comporte un ensemble de cellules de batterie 410 (ou accumulateurs) prévues pour stocker l'énergie électrique, typiquement sous une forme chimique, et la restituer à tout moment sur demande. Les cellules 410 sont gérées par un système de gestion de batterie BMS 420.

De façon connue, le BMS surveille l'état de différents éléments de la batterie, tels que la tension et le courant dans la batterie, la température, l'état de charge de la batterie (SoC pour « State of Charge ») ou sa profondeur de décharge (DoD pour « Depth of Discharge », l'état de santé de la batterie (SoH pour « State of Health »).

L'état de charge SoC indique en particulier le niveau de charge de la batterie, c'est-à-dire l'énergie restante, entre 100% (batterie totalement chargée) et 0% (batterie totalement déchargée). De façon réciproque, la profondeur de décharge DoD est le complément à 100% de l'état de charge SoC : SoC+DoD = 100%. L'état de charge SoC peut être déterminé par toute technique, par exemple à l'aide de la méthode de tension en circuit ouvert (OCV) : la tension aux bornes de la batterie en circuit ouvert est représentative de l'état de charge. En variante, une méthode basée sur le courant (méthode Coulomb Counting) permet de déterminer l'évolution de l'état de charge alors que la batterie est en cours d'utilisation.

Le BMS 420 transmet de façon continue, par exemple toutes les secondes, l'état de charge SoC des batteries 41, 42 à l'unité de gestion d'alimentation PMU 130 pour mettre en oeuvre le procédé de gestion de l'alimentation des moteurs.

Le BMS 420 contrôle également le courant électrique sortant (décharge de la batterie) et entrant (charge de la batterie).

Le BMS 420 présente également d'autres fonctionnalités, telles que le suivi de données et la protection de la batterie contre des surintensités et surtensions.

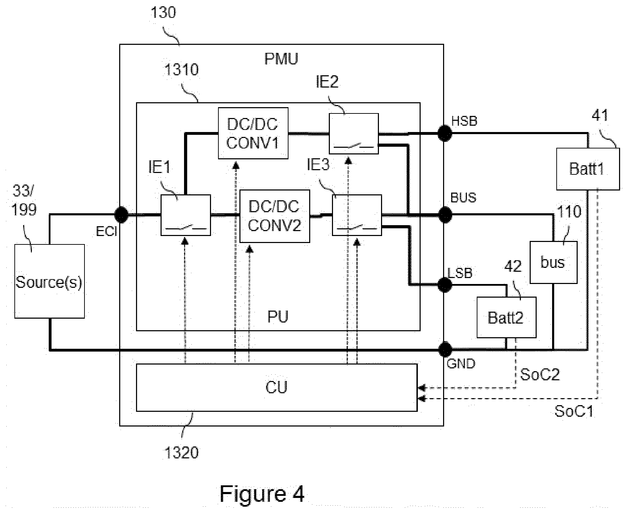

La **Figure 4** illustre schématiquement un exemple d'unité de gestion d'alimentation PMU 130 selon des modes de réalisation de l'invention.

L'unité 130 comprend une unité d'alimentation 1310 et une unité de contrôle 1320. Ces unités peuvent être mises en oeuvre par programme informatique comportant des instructions pour la mise en oeuvre d'un procédé de gestion de l'alimentation du véhicule VAE 10, lorsque ce programme est exécuté par un processeur. Le programme informatique peut être enregistré sur un support d'enregistrement non transitoire lisible par un ordinateur. En variante, ces unités peuvent être mises en oeuvre de façon matérielle, typiquement sous la forme d'un circuit intégré propre à une application (ou ASIC pour « application-specific integrated circuit »).

L'unité 130 est reliée électriquement à différents composants dont le bus d'alimentation 110 via le point de connexion électrique BUS, chacune des batteries 40 (sur la Figure aux deux batteries 41, 42) via les points de connexion électrique HSB et LSB et diverses sources électriques annexes 199 via le point de connexion électrique ECI, telles la génératrice pédalier/maindalier 33, la génératrice par récupération d'énergie de freinage (incorporé aux moteurs-moyeux ou autre moyen de freinage), le panneau solaire, etc.

Sur la figure, les sources annexes sont reliées à l'unité PMU 130 en un même point de connexion ECI. Les sources annexes, lorsqu'elles sont plurielles, opèrent donc à tension égale et sont reliées en parallèle au point de connexion. En variante et notamment lorsque les sources annexes ont des tensions différentes, celles-ci sont reliées à l'unité PMU 130 en des points de connexion distincts (un point par tension). A chaque point de connexion est alors associé un ou plusieurs convertisseurs de tension continu-continu (DC/DC) pour convertir la tension du signal électrique source en une tension adaptée à celle du bus d'alimentation 110 et/ou des batteries 40. Typiquement, les convertisseurs lissent la tension entrante dans les batteries à 53.7V +0.3/-0 pour des batteries 48V. Aucun convertisseur de tension n'est nécessaire pour des sources opérant déjà à la tension commune du bus d'alimentation 110 et des batteries.

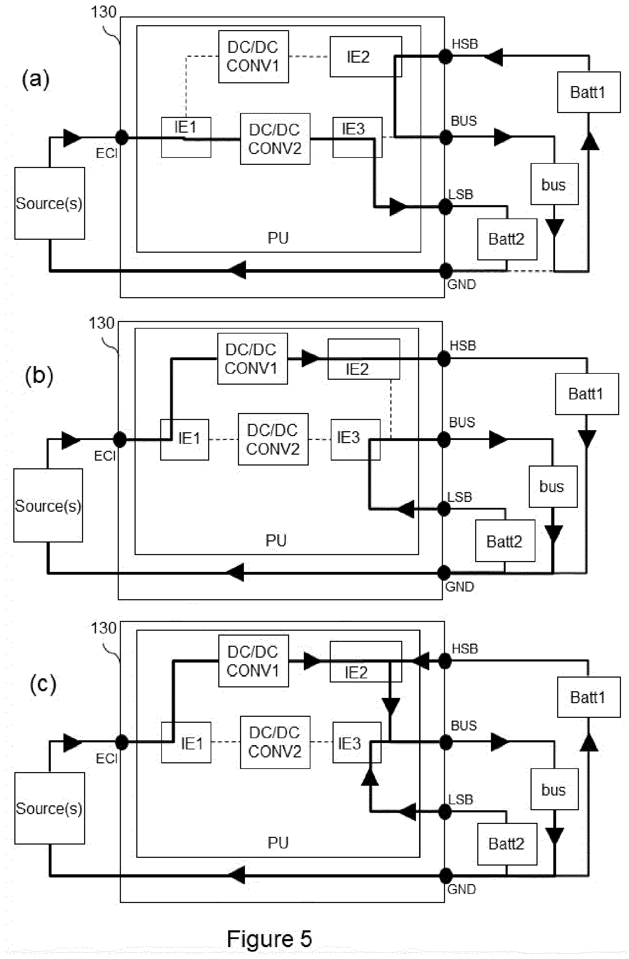

L'unité d'alimentation 1310 ou PU (pour « power unit ») est configurée pour mettre en connexion électrique les différents composants en réponse à des instructions de l'unité de contrôle 1320 ou CU (pour « control unit »). A cette fin, la PU 1310 comporte un ensemble d'interrupteurs électroniques, commandés par la CU 1320, permettant de basculer entre différents modes d'alimentation, notamment ceux illustrés à la Figure 5.

La CU 1320 reçoit les états de charge SoC des batteries 40 comme évoqué précédemment, lui permettant de mettre en oeuvre le procédé de gestion de l'alimentation du VAE en commandant de façon appropriée les interrupteurs électroniques de la PU 1310.

Le premier interrupteur IE1 connecte la ou les sources électriques annexes 33/199 à un deuxième interrupteur IE2 via un éventuel convertisseur DC/DC CONV1 dans une première position et à un troisième interrupteur IE3 via un éventuel convertisseur DC/DC CONV2 dans une seconde position. Les deux convertisseurs DC/DC peuvent être remplacés par un unique convertisseur DC/DC entre le point de connexion ECI et le premier interrupteur IE1. De la sorte, la CU 1320 peut diriger un courant de charge issu de la source annexe vers une première sortie de l'IE1 en direction du deuxième interrupteur IE2 et ainsi de la première batterie 41 ou vers une deuxième sortie de l'IE1 en direction du troisième interrupteur IE3 et ainsi de la deuxième batterie 42.

Le deuxième interrupteur IE2 connecte la première sortie de l'IE1 à la première batterie 41 dans une première position correspondant à un mode de charge de la première batterie par la ou les sources électriques annexes, connecte la première batterie 41 au bus d'alimentation 110 dans une deuxième position correspondant à l'alimentation du ou des moteurs par la première batterie, ou connecte la première sortie de l'IE1 et la première batterie 41 au bus d'alimentation 110 dans une troisième position correspondant à l'alimentation cumulée du ou des moteurs 32 par la ou les sources électriques annexes et la première batterie 41.

Le troisième interrupteur IE3 connecte la deuxième sortie de l'IE2 à la deuxième batterie 42 dans une première position correspondant à un mode de charge de la deuxième batterie par la ou les sources électriques annexes, ou connecte la deuxième batterie 42 au bus d'alimentation 110 dans une deuxième position correspondant à l'alimentation du ou des moteurs par la deuxième batterie 42.

La **Figure 5** illustre trois mode d'alimentation du VAE.

Le mode de la **Figure 5(a)****,** dit mode « charge Batt2 », correspond à l'alimentation du ou des moteurs 32 du VAE par la première batterie 41 tandis que la deuxième batterie 42 est en charge par la ou les sources électriques annexes 33/199. Dans ce mode « charge Batt2 », l'interrupteur IE1 est dans la deuxième position orientant le courant de charge vers l'interrupteur IE3. L'interrupteur IE3 est dans la première position connectant la deuxième batterie 42 à la/les sources électriques annexes. Ainsi la deuxième batterie 42 opère une recharge. L'interrupteur IE2 est, quant à lui, dans la deuxième position alimentant ainsi le ou les moteurs 32 par la première batterie 41.

Le mode de la **Figure 5(b)****,** dit mode « charge Batt1 », correspond à l'alimentation du ou des moteurs 32 du VAE par la deuxième batterie 42 tandis que la première batterie 41 est en charge par la ou les sources électriques annexes. Dans ce mode « charge Batt1 », l'interrupteur IE1 est dans la première position orientant le courant de charge vers l'interrupteur IE2. L'interrupteur IE2 est dans la première position connectant la première batterie 41 à la/les sources électriques annexes. Ainsi la première batterie 41 opère une recharge. L'interrupteur IE3 est, quant à lui, dans la deuxième position alimentant ainsi le ou les moteurs 32 par la deuxième batterie 42.

Le mode de la Figure 5(c), dit mode « alimentation totale », correspond à l'alimentation du ou des moteurs 32 du VAE par les deux batteries 41, 42 cumulées à la ou les sources électriques annexes 33/199. Dans ce mode, l'interrupteur IE1 est dans la première position orientant le courant des sources vers l'interrupteur IE2. L'interrupteur IE2 est dans la troisième position connectant ensemble la première batterie 41, le bus d'alimentation 110 et la/les sources électriques annexes. L'interrupteur IE3 est, quant à lui, dans la deuxième position connectant la deuxième batterie 42 avec le bus d'alimentation 110. Ainsi, les deux batteries et la/les sources électriques annexes sont connectées en parallèle au bus d'alimentation 110, alimentant ainsi, de façon combinée, le ou les moteurs 32.

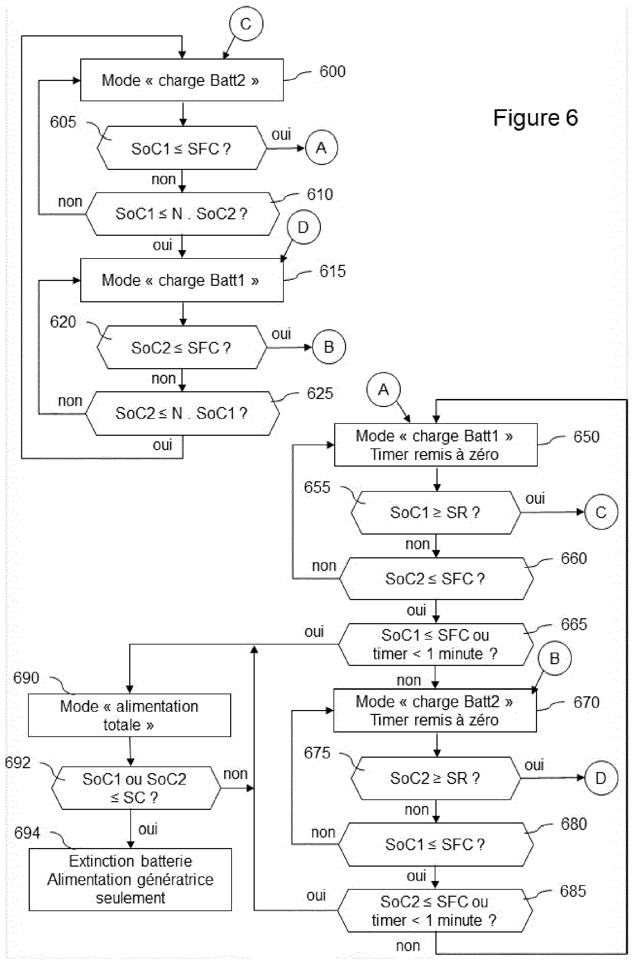

La **Figure 6** illustre, à l'aide d'un ordinogramme, des étapes d'un procédé de gestion d'alimentation d'un VAE selon des modes de réalisation.

Les explications qui suivent sont réalisées pour un VAE doté de deux batteries, Batt1 41 et Batt2 42. Cependant, un procédé d'alimentation d'un VAE peut mettre en oeuvre un plus grand nombre de batteries. L'homme du métier est à même d'adapter le procédé ci-dessous en présence de trois ou plus batteries. Notamment, seule une batterie est mise en charge lors d'une bascule, cette bascule étant déclenchée par un état de charge de cette batterie passant un des critères évoqués ci-après, basés soit sur l'état de charge de la batterie en cours de charge soit sur un seuil prédéfini (mode « faible SoC »).

Dans la suite, SoC1 fait référence à l'état de charge de la première batterie Batt1 41 alors que SoC2 fait référence à l'état de charge de la deuxième batterie Batt2 42.

En utilisation normale, le VAE 10 est assisté électriquement en mode « charge Batt2 » de la **Figure 5(a)** ou « charge Batt1 » de la **Figure 5(b)****,** correspondant respectivement à une alimentation du ou des moteurs 32 par la première batterie Batt1 41 et la deuxième batterie Batt2 42. Le procédé de gestion de l'alimentation opère une bascule répétée entre ceux deux modes, un seuil de bascule vers le mode de charge d'une dite batterie par la ou les sources annexes étant défini par un état de charge de ladite batterie correspondant à une portion prédéfinie de l'état de charge courant de la batterie en charge.

Lorsque le VAE est en mode « charge Batt2 » 600 dans lequel le ou les moteurs 32 sont alimentés par la première batterie 41 alors que la deuxième batterie 42 est en charge par la ou les sources électriques annexes, on détermine (605) si la première batterie atteint un état de faible charge en comparant son état de charge SoC1 avec un premier seuil de faible charge prédéfini SFC, par exemple 10%, 15% ou 20%. Si tel est le cas la bascule fonction d'une portion de l'état de charge courant de la batterie en charge est désactivée au profit d'une bascule entre les deux modes de charge chaque fois qu'un état de charge d'une des batteries passe sous le seuil de faible charge SFC. Il s'agit de l'étape 650 décrite par la suite.

Tant que la première batterie 41 n'atteint pas un état de faible charge, on vérifie (610) si son état de charge courant SoC1 passe sous une portion N prédéfinie de l'état de charge courant SoC2 de la deuxième batterie en cours de charge. N peut être égal à 30%, 1/3, 40%, 50%, 60%, 2/3, 70%, 75%, 80% et plus généralement toute valeur entre 30 et 80%. Tant que SoC1 >N.SoC2, le VAE reste en mode « charge Batt2 » en bouclant sur l'étape 600.

La première batterie se déchargeant alors que la deuxième batterie se recharge, il arrive un moment où SoC1 ≤ N.SoC2. Dans ce cas, le VAE bascule en mode « charge Batt1 » à l'étape 615 dans lequel le ou les moteurs 32 sont désormais alimentés par la deuxième batterie 42 alors que la première batterie 41 est mise en charge (chargée par la ou les sources électriques annexes). De façon similaire à l'étape 605, on détermine (620) si la deuxième batterie atteint un état de faible charge en comparant son état de charge SoC2 avec le seuil de faible charge SFC. A nouveau, si tel est le cas la bascule fonction d'une portion de l'état de charge courant de la batterie en charge est désactivée au profit d'une bascule entre les deux modes de charge chaque fois qu'un état de charge d'une des batteries passe sous le seuil de faible charge SFC. Il s'agit de l'étape 670 décrite par la suite.

Tant que la deuxième batterie 42 n'atteint pas un état de faible charge, on vérifie (625) si son état de charge courant SoC2 passe sous la portion N prédéfinie de l'état de charge courant SoC1 de la batterie en cours de charge. Ici, tant que SoC2>N.SoC1, le VAE reste en mode « charge Batt1 » en bouclant sur l'étape 615.

La deuxième batterie se déchargeant alors que la première batterie se recharge, il arrive un moment où SoC2 ≤ N.SoC1. Dans ce cas, le VAE rebascule en mode « charge Batt2 » à l'étape 600 déjà décrite. Ainsi, le procédé de gestion de l'alimentation d'une VAE selon la **Figure 6** bascule de façon répétée entre un premier mode de charge d'une première batterie par les sources électriques annexes et d'alimentation d'un ou plusieurs moteurs électriques d'entrainement par au moins une deuxième batterie et un deuxième mode de charge de la deuxième batterie par les sources électriques annexes et d'alimentation du ou des moteurs électriques par au moins la première batterie. La bascule est fonction des états de charge respectifs des deux ou plus batteries. Un seuil de bascule vers le mode de charge d'une dite batterie (première ou deuxième) est défini par un état de charge de ladite batterie correspondant à une portion prédéfinie de l'état de charge courant de la batterie en charge (deuxième ou première).

Lorsqu'une des batteries passe dans un état de faible charge, le procédé de gestion de l'alimentation du VAE passe dans le mode de gestion « faible SoC » représenté par les étapes 650 à 685.

Lorsque la première batterie bascule dans un état de faible charge au sortir de l'étape 605, elle est mise en charge au travers du mode « charge Batt1 » (étape 650). Une information d'horodatage ou timer est également mémorisée dans un registre. Cette information est utilisée, comme décrit par la suite, pour contrôler une situation dans laquelle des bascules trop fréquences de modes de charge venaient à apparaître.

L'étape suivante 655 détermine s'il est possible de sortir du mode de gestion « faible SoC » en raison notamment de la recharge importante de la première batterie. Aussi, l'état de charge SoC1 de la batterie en charge est comparé à un seuil prédéfini de restauration SR, par exemple 40%, 50% ou 60%. En cas de recharge suffisante, le procédé peut se poursuivre à l'étape 600 déjà décrite. Ainsi, lorsque l'état de charge d'une batterie repasse au-dessus d'un seuil de restauration, les bascules entre les modes « charge Batt1 » et « charge Batt2 » fonction de la portion N de l'état de charge courant de la batterie en charge sont réactivées.

Tant que la première batterie 41 n'est pas suffisamment rechargée, on détermine si la deuxième batterie 42 n'entre pas, elle aussi, dans un état de faible charge. Pour ce faire, à l'étape 660, on compare l'état de charge SoC2 de la deuxième batterie avec le seuil de faible charge prédéfini SFC. Si la deuxième batterie 42 n'atteint pas un état de faible charge, elle continue d'alimenter le ou les moteurs 32 du VAE tandis que la charge de la première batterie 41 se poursuit (boucle vers 650).

En revanche, si la deuxième batterie 42 atteint un état de faible charge, on vérifie à l'étape 665 si les deux batteries sont en même temps dans un état de faible charge ou si la bascule de l'étape 650 vers le mode « charge Batt1 » est récente, démontrant des bascules trop rapides. Typiquement l'information d'horodatage mémorisée à l'étape 650 peut être utilisée pour déterminer s'il s'est écoulé un laps de temps inférieur à un seuil de détection, par exemple une minute. Dans l'affirmative de l'étape 665, le VAE se met en mode critique au travers de l'étape 690 décrite par la suite.

Dans la négative de l'étape 665, la deuxième batterie (dans un état de faible charge) est mise en charge au travers du mode « charge Batt2 » (étape 670). Ainsi, la première batterie 41 a été mis en charge (étape 650) jusqu'à ce que l'état de charge de la deuxième batterie passent sous le seuil de faible charge SFC. Toujours à l'étape 670, l'information d'horodatage est mise à jour dans le registre avec l'heure courante.

L'étape suivante 675 détermine s'il est possible de sortir du mode de gestion « faible SoC » en raison notamment de la recharge importante de la deuxième batterie. L'état de charge SoC2 de la batterie en charge est comparé au seuil de restauration SR. En cas de recharge suffisante, le procédé peut se poursuivre à l'étape 615 déjà décrite.

Tant que la deuxième batterie 42 n'est pas suffisamment rechargée, on détermine si la première batterie 41 n'entre pas, elle aussi, dans un état de faible charge. Pour ce faire, à l'étape 680, on compare l'état de charge SoC1 de la première batterie avec le seuil de faible charge prédéfini SFC. Si la première batterie 41 n'atteint pas un état de faible charge, elle continue d'alimenter le ou les moteurs 32 du VAE tandis que la charge de la deuxième batterie 42 se poursuit (boucle vers 670).

En revanche, si la première batterie 41 atteint un état de faible charge, on vérifie à l'étape 685 si les deux batteries sont en même temps dans un état de faible charge ou si la bascule de l'étape 670 vers le mode « charge Batt2 » est récente, de façon similaire à ce qui est décrit ci-dessus pour l'étape 665. Dans l'affirmative, le VAE se met en mode critique au travers de l'étape 690 décrite par la suite.

Dans la négative de l'étape 685, la première batterie (dans un état de faible charge) est mise en charge au travers du mode « charge Batt1 » en rebouclant sur l'étape 650.

Dans le mode critique de l'étape 690, le ou les moteurs électriques sont directement alimentés par les sources électriques annexes, typiquement la ou les génératrices pédalier/maindalier 33 et éventuellement les autres sources annexes, et par les batteries. Aussi, le VAE passe dans le mode de gestion « alimentation totale » de la **Figure 5(c)****.** Pour optimiser la consommation de l'énergie restante dans les batteries, le contrôleur central 120 peut délivrer aux moteurs une puissance minimale pour maintenir une vitesse de base, par exemple 15 km/h, sans dépasser la puissance obtenue directement des sources électriques annexes (typiquement la puissance générée par l'utilisateur via la génératrice pédalier 33). Ainsi, dans ce mode, les batteries n'apportent qu'un maximum de 50% d'assistance à l'utilisateur. Bien entendu, un autre pourcentage peut être mis en oeuvre.

Dans ce mode, on vérifie (étape 692) si l'état de charge de l'un des batteries passe dans un état critique, notamment en comparant SoC1 et SoC2 à un seuil critique prédéfini SC, par exemple 5%. Dans la négative, le mode « alimentation totale » de l'étape 690 est poursuivi.

Dans l'affirmative, la batterie en état critique est éteinte électriquement, c'est-à-dire désactivée ou mise en veille : son énergie électrique n'est plus délivrée sur le bus d'alimentation 130. Le ou les moteurs électriques sont uniquement et directement alimentés par les sources électriques annexes, typiquement la ou les génératrices pédalier/maindalier 33 et éventuellement les autres sources électriques annexes. Les interrupteurs IE1, IE2 et IE3 sont contrôlés en conséquence. L'autre batterie est utilisée pour alimenter, le cas échéant, l'IHM 50. C'est l'étape 694.

Ce mode permet à l'utilisateur de se rendre sur un point de recharge du VAE pour recharger les batteries par une prise secteur. La batterie en état critique n'est réactivée (sortie de l'état de veille) par le branchement au réseau électrique.

Les exemples qui précèdent ne sont que des modes de réalisation de l'invention qui ne s'y limite pas.

## Revendications

1. Procédé de gestion de l'alimentation électrique d'un véhicule à assistance électrique (10) doté d'au moins deux batteries (40, 41, 42), comprenant l'étape suivante :
basculer (600, 615) entre un premier mode de charge d'une première batterie (41) par au moins une source électrique (33, 199) et d'alimentation d'un ou plusieurs moteurs électriques d'entrainement (32) par au moins une deuxième batterie (42) et un deuxième mode de charge de la deuxième batterie (42) par l'au moins une source électrique et d'alimentation du ou des moteurs électriques (32) par au moins la première batterie (41), la bascule étant fonction des états de charge respectifs des deux ou plus batteries (SoC1, SoC2),
**caractérisé en ce qu'**un seuil de bascule vers le mode de charge d'une dite batterie est défini par un état de charge (SoC1, SoC2) de ladite batterie correspondant à une portion prédéfinie (N) de l'état de charge courant (SoC2, SoC1) de l'autre batterie en charge.

2. Procédé selon la revendication 1, dans lequel la bascule vers le mode de charge de ladite batterie en fonction d'une portion de l'état de charge courant de l'autre batterie en charge est désactivée (A, B) pour ladite batterie lorsque l'état de charge de ladite batterie passe sous un seuil de faible charge prédéfini (SFC).

3. Procédé selon la revendication 2, dans lequel ladite batterie dont l'état de charge passe sous le seuil de faible charge est mise en charge (650, 670) jusqu'à ce que l'état de charge d'une autre batterie passent sous le seuil de faible charge (660, 680).

4. Procédé selon la revendication 3, comprenant l'étape suivante : basculer (650, 670) entre les modes de charge chaque fois qu'un état de charge (SoC1, SoC2) d'une batterie passe sous le seuil de faible charge (SFC), la batterie passant sous le seuil de faible charge étant mise en charge alors que l'autre ou les autres batteries alimentent le ou les moteurs électriques (32).

5. Procédé selon la revendication 4, dans lequel lorsque l'état de charge de toutes les batteries passe sous le seuil de faible charge ou qu'une fréquence de bascule entre les modes de charge est supérieure à une fréquence critique, le ou les moteurs électriques sont directement alimentés (690) par les batteries (40, 41, 42) et par l'au moins une source électrique.

6. Procédé selon la revendication 5, dans lequel une batterie est mise en veille électriquement (694) lorsque son état de charge passe sous un seuil critique prédéfini (SC).

7. Procédé selon la revendication 6, dans lequel lorsqu'une batterie est mise en veille, le ou les moteurs électriques (32) sont uniquement et directement alimentés par l'au moins une source électrique.

8. Procédé selon l'une des revendications 2 à 7, dans lequel la bascule vers le mode de charge de ladite batterie en fonction d'une portion de l'état de charge courant de la batterie en charge est réactivée (C, D) lorsque l'état de charge d'une batterie précédemment sous le seuil de faible charge (SFC) repasse au-dessus d'un seuil de restauration (SR).

9. Procédé selon l'une des revendications précédentes, dans lequel l'au moins une source électrique est embarquée dans le véhicule à assistance électrique et comprend une ou plusieurs sources parmi : au moins une génératrice actionnée par un pédalier ou maindalier, le ou les moteurs configurés en génératrices, une génératrice couplée à un moyen de freinage régénératif, un panneau solaire.

10. Véhicule à assistance électrique (10) doté d'au moins deux batteries (40, 41, 42) pour l'alimentation d'un ou plusieurs moteurs électriques d'entrainement (32), comprenant une unité de contrôle (130, 1320) configurée pour basculer entre un premier mode de charge d'une première batterie (41) par au moins une source électrique (33, 199) et d'alimentation du ou des moteurs électriques (32) par au moins une deuxième batterie (42) et un deuxième mode de charge de la deuxième batterie (42) par l'au moins une source électrique et d'alimentation du ou des moteurs électriques (32) par au moins la première batterie (41), la bascule étant fonction des états de charge respectifs des deux ou plus batteries (SoC1, SoC2),
**caractérisé en ce qu'**un seuil de bascule vers le mode de charge d'une dite batterie est défini par un état de charge (SoC1, SoC2) de ladite batterie correspondant à une portion prédéfinie (N) de l'état de charge courant (SoC2, SoC1) de l'autre batterie en charge.
